# EUROPÄISCHE PATENTSCHRIFT

(11) **EP 1 435 148 B1**
(45) Veröffentlichungstag und Bekanntmachung des Hinweises auf die Patenterteilung: **31.08.2011**
(21) Anmeldenummer: 02769927.1
(22) Anmeldetag: 07.09.2002
(51) Int. Cl.: H04L 1/00

(54) **VERFAHREN ZUR AUSGABE VON PERSONALISIERTEN INFORMATIONEN AUF EINER WEBSITE**
METHOD FOR CUSTOMIZED DATA OUTPUT ON A WEB SITE
PROCEDE DE SORTIE D'INFORMATIONS PERSONNALISEES SUR UN SITE WEB

(30) Priorität: 04.10.2001 DE 10148985
(43) Veröffentlichungstag der Anmeldung: 07.07.2004
(73) Patentinhaber: Deutsche Telekom AG, 53113 Bonn (DE)
(72) Erfinder: SCHWENK, Jörg, 91239 Henfenfeld (DE)
(74) Vertreter: Drosch, Ulrich
(86) Internationale Anmeldenummer: PCT/DE2002/003321
(87) Internationale Veröffentlichungsnummer: WO 2003/032552

(56) Entgegenhaltungen:
- WO-A-00/54183
- US-A1- 2002 016 831
- US-B1- 6 253 327

## Beschreibung

Die Erfindung betrifft ein Verfahren zur Ausgabe von personalisierten Informationen auf einer Website. Mittels des Verfahrens können speziell für einen Internetbenutzer oder eine definierte Personengruppe bestimmte Informationen gezielt dem Inhalt einer Website hinzugefügt werden.
Es ist gegenwärtig bekannt, an Nutzer des Internets Werbebotschaften in Form von Werbebannern, welche auf einer Internetseite eingeblendet werden, zu übermitteln oder diese durch Öffnen eines neuen Browserfensters zu übertragen. Während diese und andere Informationsinhalte anfangs statisch bzw. undifferenziert waren, gibt es heute bereits Verfahren, mit denen Werbebanner abhängig von der Kundengruppe eingeblendet werden können. Eine Möglichkeit hierfür besteht in der Differenzierung der Internetnutzer nach Staaten und/oder Sprachregionen. So ist beispielsweise die Möglichkeit gegeben, gezielt auf einer amerikanischen Website, also einer unter der Internet-Top-Level-Domain US verwalteten Seite für einen die Seite aus dem deutschen Sprachraum aufrufenden Internetnutzer deutschsprachige Werbung einzublenden. Hierfür bedient man sich der Erkennung des IP-Subnetzes innerhalb der an den jeweiligen Webserver übermittelten Internetadresse des die Seite aufrufenden Clients. Die bei dem Server ankommende IP-Adresse kann über das ermittelte Subnetz zu einem Land oder (im Falle von Domains wie .net oder.org) auch einem Internetserviceprovider (ISP) zugeordnet werden.
Eine weitere Möglichkeit besteht in der bereits umfangreich praktizierten Verwendung sogenannter Cookies. Hierbei kann ein Webserver in der Cookie-Datei eines vom Nutzer verwendeten Browsers einen Wert hinterlassen, der es ihm ermöglicht, den Browser bei einem späteren erneuten Zugriff auf den Webserver wiederzuerkennen. Die Nutzung des Cookies ist jedoch auf den jeweiligen Webserver beschränkt. Soweit bekannt existiert für die Cookies kein standardisiertes Format. Zumindest bei der erstgenannten Lösung ist die Möglichkeiten Web-Seiten bis hinunter zur Ebene des einzelnen Nutzers zu personalisieren, nicht gegeben. Für beide Lösungen gilt darüber hinaus, dass sie ohne Zutun und daher auch weitestgehend ohne Beeinflussungsmöglichkeit durch den Nutzer (abgesehen von der Möglichkeit, die Verwendung von Cookies durch den Browser zu deaktivieren und damit jedoch auch auf die Nutzung eines Teils der Web-Inhalte zu verzichten) ablaufen. In vielen Fällen wird deshalb beispielsweise Werbung auch als störend oder lästig empfunden. Es gibt daher bereits Programme, mit denen Werbebanner auf den Internetseiten blockiert bzw. bei der Wiedergabe entfernt werden können. Dem steht gegenüber, dass bestimmte Inhalte den Nutzer (Kunden) unter Umständen durchaus interessieren, diese jedoch bei der Verwendung vorgenannter Programme ebenfalls blockiert werden. Über den Rahmen der Werbemöglichkeit hinaus, ist aber außerdem ein grundsätzlicher Bedarf gegeben, Websites um speziell auf einen oder mehrere bestimmte Nutzer zugeschnittene Informationsinhalte zu ergänzen.

Der Erfindung liegt die Aufgabe zugrunde, ein Verfahren anzugeben, welches die Ausgabe personalisierter Informationen auf einer von einem Internetnutzer abgerufenen Website ermöglicht und dabei die Nachteile der vorgenannten Verfahren vermeidet. Insbesondere soll eine Personalisierung bis hinunter auf die Ebene des einzelnen Internetnutzers ermöglicht werden. Vorteilhafterweise soll es das Verfahren zudem zulassen, dass der Nutzer selbst beeinflussen kann, welche zusätzlichen Informationen ihm angeboten werden.

Die Aufgabe wird durch ein Verfahren mit den Merkmalen des Hauptanspruches gelöst. Auch nach dem zur Lösung der Aufgabe vorgeschlagenen Verfahren basiert die Ausgabe von personalisierten Informationen auf einer von einem Internetnutzer (Nutzer) aufgerufenen Website darauf, dass für den Nutzer in einer dem Zugangsserver seines Internetserviceproviders (ISP) zugeordneten Datenbank unter einem Identitätskennzeichen, wie beispielsweise der Kundennummer oder ähnlichem, eine Liste mit Präferenzen (Präferenzliste), vorzugsweise über seine persönlichen Interessen abgelegt wird. Erfindungsgemäß fordert beim Aufruf einer Website durch den Nutzer der von ihm kontaktierte Webserver diese Präferenzen über eine Datenbankabfrage beim ISP ab. Er stellt dazu eine Verbindung zu dem Datenbankserver des ISP her und übermittelt diesem im Zuge der Datenbankabfrage die temporäre IP-Adresse, von welcher aus der Abruf der Website erfolgte. Beim ISP wird durch den unmittelbar auf dem Zugangsserver realisierten oder diesem zugeordneten Datenbankserver, durch Umkehr der für die Zuweisung der temporären IP-Adresse genutzten Remote Authentication Deal-In User Service-Abfrage (RADIUS-Abfrage), ein Identitätskennzeichen des Nutzers, also beispielsweise seine Kundennummer ermittelt. Aus der Datenbank wird dann die zu dem Identitätskennzeichen abgelegte Präferenzliste abgerufen und an den Webserver übertragen. Die Präferenzen verwendet der Webserver, um der vom Nutzer aufgerufenen Website die mit ihnen korrespondierenden personalisierten Informationen hinzuzufügen. Bei dem

Durch die WO0054183 Al wird ein Verfahren beschrieben, durch welches es einem Internetserviceprovider (ISP) ermöglicht ist, personalisierte Werbung über Computer von Internetnutzern, nämlich seiner Kunden, in einer speziellen Tool Bar auf dem Bildschirm auszugeben. Hierzu werden von einem Server bereitgestellte Werbeinformationen mit Präferenzen verknüpft, welche für einen jeweiligen Kunden in einer Datenbank in den Systemen des Providers gespeichert sind. Die Verknüpfung von Werbeinhalten mit den Präferenzen des Nutzers und die Übermittlung infolge dieser Verknüpfung personalisierter Werbung auf den Computer des betreffenden Nutzers erfolgt im Zusammenhang mit dessen für die Nutzung des Internets erforderlichen Login bei den Internetzugangseinheiten des Providers. Hierdurch ist diese Art der personalisierten Werbung dem Internetserviceprovider vorbehalten. Anbietern anderer Inhalte beziehungsweise Betreibern von Websites, welche auf anderen nicht zu den Zugangseinheiten des ISP gehörenden Servern gehostet werden, steht diese Möglichkeit demnach nicht zur Verfügung. Zudem erfordert das in der Schrift beschriebene Verfahren die Installation eines entsprechenden Programmzusatzes für den vom jeweiligen Nutzer zur Internetnutzung verwendeten Browser.

Webserver kann es sich auch um einen vom ISP selbst betriebenen Server handeln, welcher beispielsweise Content zur Realisierung eines Zugangsportals bereithält. Entsprechend einer Ausgestaltungsmöglichkeit der Erfindung kann es sich im Sinne der eingangs gegebenen Erläuterungen um auf die jeweiligen Interessen des Nutzres zugeschnittene Internet-Werbung handeln. Die Interessen des Nutzers sind dazu in der Präferenzliste in geeigneter Weise kodiert.
An dieser Stelle ist anzumerken, dass die Durchführung des Verfahrens in der Praxis in der Regel sicherlich mit Zustimmung des Nutzers erfolgen wird bzw. ohne weiteres davon abhängig gemacht werden kann, indem der Nutzer seinen ISP durch die Unterzeichnung entsprechender allgemeiner Geschäftsbedingungen zur Abspeicherung entsprechender Präferenzen über seine Interessen oder ähnliches ermächtigt. In diesem Zusammenhang ist darauf hinzuweisen, dass der Webserver beim Zugriff auf die Datenbank des ISP keinerlei persönliche Daten des Nutzers erhält, sondern an ihn nur eine Liste von in geeigneter Weise kodierten Präferenzen übermittelt wird, welche auch auf andere Nutzer bzw. eine größere Gruppe von Internetnutzern zutreffen können. Der Datenschutz kann auf diese Weise sehr einfach vollends gewahrt bleiben.
Gemäß einer besonders vorteilhaften Ausgestaltung des Verfahrens wird bereits die auf dem Endgerät des Nutzers nach der Einwahl in das Internet erscheinende Portalseite unter Nutzung der für ihn gespeicherten Präferenzen personalisiert. Entsprechend einer besonders vorteilhaften weiteren Ausgestaltung hat der Nutzer zudem die Möglichkeit, über das Portal zur Veränderung der zu ihm gespeicherten Präferenzliste auf die Datenbank des ISP zuzugreifen. Dieser Zugriff kann vorteilhafterweise ebenfalls vermittels der Nutzung einer inversen RADIUS-Abfrage realisiert werden.
In einer konkreten praxisrelevanten Ausgestaltung umfasst das erfindungsgemäße Verfahren folgende Verfahrensschritte:
a) Einwahl des Nutzers in das Internet unter Nutzung eines hierzu geeigneten Endgerätes (beispielsweise Computer oder WAP-Handy) durch Einwahl bei einem Zugangsserver eines ISP,
b) Anmelden und Identifizieren des Nutzers beim Zugangsserver,
c) Zuweisen einer temporären IP-Adresse an das zur Einwahl verwendete Endgerät bzw. den auf diesem laufenden Browser mittels einer RADIUS-Abfrage,
d) Eingabe der Internetadresse (IP-Adresse) durch Angabe des Namens eines Webservers oder Anwahl eines Hyperlinks durch den Nutzer,
e) Routen der Verbindung von dem vom Nutzer verwendeten Endgerät zum Webserver,
f) Aufruf der gewünschten Website aus dem Webspace des Webservers,
g) Starten einer Datenbankabfrage beim ISP durch den Webserver unter Übermittlung der temporären IP-Adresse des zum Aufruf der Website verwendeten Endgerätes,
h) Durchführung einer inversen RADIUS-Abfrage durch den Zugangsserver oder einen diesem zugeordneten Datenbankserver des ISP zur Ermittlung eines oder mehrerer Identitätskennzeichen des Nutzers,
i) Abruf der unter den Identitätskennzeichen in der Datenbank des ISP gespeicherten Präferenzliste und Übertragung der Präferenzliste an den abfragenden Webserver,
j) Auswertung der Präferenzliste durch den Webserver und Ergänzung der zur Übertragung an den Nutzer bereitgehaltenen Website um mit den Präferenzen korrespondierende personalisierte Informationen,
k) Übertragung der Website mit den personalisierten Informationen an das Endgerät des Nutzers.

Die Anmeldung und Identifizierung des Nutzers bei der Einwahl in das IP-Netz kann unter Verwendung verschiedener hierfür gebräuchlicher Methoden erfolgen. So ist es im Sinne der Erfindung, wenn dies beispielsweise unter Verwendung der Password Authentication Protocol-Methode (PAP) erfolgt. Der Zugangsserver oder der ihm zugeordnete Datenbankserver löst dabei die ihm von einem Webserver im Zuge der Datenbankabfrage mitgeteilte temporäre IP-Adresse des Nutzers durch die inverse RADIUS-Abfrage zu Username und gegebenenfalls Password auf. Unter Nutzung dieser Angaben (Identitätsmerkmale) oder einer mit ihnen korrespondierenden Kundennummer greift er auf die in der Datenbank gespeicherte Präferenzliste zu.
Auch eine Ausgestaltung des Verfahrens, bei welcher die Anmeldung und Identifizierung des Nutzers bei der Einwahl in das IP-Netz unter Verwendung der Challenge and Response Authentication Protocol-Methode (CHAP) erfolgt ist möglich. In diesem Falle greift der Zugangsserver bzw. der Datenbankserver über eine inverse RADIUS-Abfrage unter Nutzung der CHAP-Methode und dabei erhaltener Identitätsmerkmale auf die in der Datenbank gespeicherte Präferenzliste zu.

Wie bereits hinlänglich erläutert, beruht das erfindungsgemäße Verfahren im Kern auf der Nutzung der bei der Einwahl in das Internet ohnehin erfolgenden RADIUS-Abfrage oder, besser gesagt, auf deren Umkehr. Während den Webservern innerhalb des Netzes feststehende IP-Adressen zugeordnet sind, unter welchen sie von den Nutzern der auf ihnen abgelegten Inhalte kontaktiert werden können, wird den Nutzern selbst, jeweils nur für die Zeit in der sie mittels eines dafür geeigneten Systems aus Hard- und Software online sind, eine temporäre IP-Adresse zugeteilt. Dies geschieht bei der Einwahl in das Internet. Im Zusammenhang mit der Einwahl spricht man auch davon, dass der Nutzer sich anmeldet. Er muss sich nämlich gegenüber dem Provider (Internetserviceprovider - ISP) bzw. dessen Einwahlknoten oder Zugangsserver, welcher ihm dem Zugang zum Netz physisch ermöglicht, identifizieren. Dies geschieht in der oben bereits erwähnten Weise, zumeist durch Eingabe eines Usernamen und eines Passwords. Auf dieser Grundlage weist der ISP ihm bzw. dem von ihm verwendeten System nach einer standardisierten Prozedur, nämlich der sogenannten RADIUS-Abfrage, eine temporäre, für die Dauer der Online-Sitzung gültige IP-Adresse zu, welche die aus physikalischer Sicht entscheidende Empfängerangabe zum Empfang angeforderter und über das Netz übertragener Daten darstellt. In diesem Zusammenhang wird auf dem Zugangsserver ein die augenblickliche Zuordnung zwischen der temporären IP-Adresse und bestimmten Kundendaten des Nutzers festhaltender Eintrag abgespeichert. Ein solcher RADIUS-Nutzereintrag sieht beispielsweise wie folgt aus:

| | |
|---|---|
| user_x | Password = "abcde", Caller-Id = "00402226778" |
| | Ascend-Send-Auth = Send-Auth-PAP, |
| | Framed-Protocol = PPP, |
| | User-Service = Framed-User, |
| | Framed-Address = 141.45.240.1., |
| | Framed-Netmask = 255.255.255.255, |
| | Ascend-Metric = 2, |
| | Framed-Routing = None, |
| | Ascend-Idle-Limit = 720, |
| | Ascend-Dial-Number = 00402226778, |

wobei die Nummer des Anschlusses über den die Einwahl erfolgt, häufig auch als Kundennummer dient oder mit dieser zumindest verknüpft ist. Es wird nun ersichtlich, dass sich bei Kenntnis der temporären IP-Adresse im Umkehrschluss (daher hier als inverse RADIUS-Abfrage bezeichnet) anhand dieser IP-Adresse auf Daten (beispielsweise die Caller-ID als Rufnummer des die Verbindung aufbauenden Nutzers) schließen lässt, welche den Nutzer (Kunden) eindeutig identifizieren, also ein Identitätsmerkmal für ihn darstellen.
In der Art eines Ausführungsbeispiels, jedoch ohne erläuternde Zeichnungen soll ein möglicher Ablauf des Verfahrens, wie er sich aus der Sicht eines Internetnutzers darstellt, nachfolgend nochmals wiedergegeben werden. Durch den Start eines Browsers auf seinem intemetfähigen Endgerät verbindet sich der Nutzer mit dem Zugangsserver eines ISP, bei dem er sich durch persönliche Angaben (z.B. Username, Password) identifizieren muss und auf dem zuvor (vorzugsweise durch den Nutzer autorisiert) entsprechende Präferenzen des Nutzers abgespeichert wurden. Gleichzeitig sendet der Nutzer aufgrund einer in seinem Browser bereits eingestellten Startadresse oder einer von ihm eingegebenen Adresse mittels des TCP/IP einen http-Request um mit einem Webserver zum Aufruf einer Website verbunden zu werden. Der Webserver, dessen Betreiber von der Möglichkeit der Verbreitung personalisierter Informationen Gebrauch macht, richtet unbemerkt vom Nutzer eine Datenbankabfrage zum Erhalt der für den Nutzer hinterlegten Präferenzen an einen Server des ISP, wobei er dieser Datenbankabfrage die dem Nutzer nach dem RADIUS-Verfahren zugeteilte temporäre IP-Adresse hinzufügt. Ebenfalls im Hintergrund und unbemerkt vom Nutzer bekommt er vom ISP die im Ergebnis einer umgekehrten bzw. inversen RADIUS-Abfrage erhaltenen Präferenzen des Nutzers übennittelt. Auf deren Grundlage kann er die vom Nutzer aufgerufene Website um mit ihnen korrespondierende zusätzliche Informationen ergänzen. Beim Nutzer, welcher beispielsweise die Website einer Internetsuchmaschine aufgerufen hat, werden neben deren "normaler" Oberfläche beispielsweise Informationen über Sonderangebote bestimmter Computeranbieter dargestellt. Er erhält also nicht irgendeine Werbung, sondern wird über Produkte unterrichtet, welche ihn interessieren und für die er durch Angebe entsprechender Präferenzen sein Interesse bekundet hat.
Der große Vorteil des Verfahrens liegt darin, dass die Informationen, welche einer Website als variabler Anteil hinzugefügt werden können, bis zur Ebene eines einzelnen Nutzers hinunter personalisierbar sind. Im Moment des Aufrufs der Website durch den Nutzer geschieht dies ohne sein aktives Zutun. Dennoch erhält er durch die Verknüpfung mit den in der Datenbank von ihm hinterlegten Präferenzen nur die Informationen, die er zu erhalten wünscht. In der vorteilhaften Weiterbildung des Verfahrens ist es ihm dabei sogar möglich, die entsprechenden Präferenzen jederzeit zu verändern. Aus der sicht des ISP liegt der Vorteil in dem Mehrwert, den er durch das gezielte Platzieren von zusätzlichen Informationen, vorzugsweise Werbung erzielen kann. Personalisierte Werbung kann er beispielsweise selbst mittels eines eigenen, zur Realisierung eines Zugangsportals entsprechenden Content bereitstellenden Webservers platzieren oder auch an deren Platzierung durch Dritte (andere Betreiber von Webservern) partizipieren, indem er sich die Bereitstellung der Daten mit den Präferenzen der Nutzer aus seiner Datenbank entgelten lässt. Dies ist letztlich lediglich eine Frage der Gestaltung entsprechender Verträge.
Vorstehend wurde das Verfahren im Wesentlichen im Zusammenhang mit der Platzierung personalisierter Werbung auf Web-Seiten dargestellt. Es ist aber ausdrücklich zu betonen, dass sich auch andere personalisierte Informationen nach diesem Prinzip zusammen mit den Web-Seiten übertragen lassen und sich die Erfindung insofern nicht auf diese Anwendung beschränkt.

## Patentansprüche

1. Verfahren zur Ausgabe von personalisierten Informationen für einen eine Website aufrufenden Internetnutzer (Nutzer), bei welchem für den Nutzer in einer dem Zugangsserver seines Intemetserviceproviders (ISP) zugeordneten Datenbank unter einem Identitätskennzeichen, wie der Kundennummer oder ähnlichem, eine Liste mit Präferenzen (Präferenzliste), vorzugsweise über persönliche Interessen des Nutzers abgelegt wird, **dadurch gekennzeichnet, dass** ein vom Nutzer zum Aufruf einer Website kontaktierter Webserver über eine Datenbankabfrage beim ISP des Nutzers dessen Präferenzen abfordert und der Webserver die vom Nutzer aufgerufene Website vor deren Übertragung auf das vom Nutzer für den Internetzugang genutzte Endgerät (Computer oder Telekommunikationsendgerät) auf der Grundlage der aus der Datenbank erhaltenen Präferenzen um personalisierte Informationen ergänzt, wobei der Webserver für die Datenbankabfrage die temporäre IP-Adresse des für den Zugriff auf die Website benutzten Endgerätes an den ISP übermittelt und beim ISP durch Umkehr der für die Zuweisung der temporären IP-Adresse genutzten Remote Authentication Dial-In User Service-Abfrage (RADIUS-Abfrage) das Identitätskennzeichen des Nutzers ermittelt sowie die zu dem Identitätskennzeichen in der Datenbank abgelegte Präferenzliste an den Webserver übertragen wird, bei welchem es sich auch um einen Webserver des ISP selbst handeln kann.

2. Verfahren nach Anspruch 1, **dadurch gekennzeichnet, dass** es sich bei den personalisierten Informationen um auf die jeweiligen Interessen des Nutzers zugeschnittene Internet-Werbung handelt, wobei diese Interessen in der Präferenzliste kodiert sind, welche in der Datenbank des ISP unter seinem Identitätskennzeichen gehalten wird.

3. Verfahren nach Anspruch 1 oder 2, **dadurch gekennzeichnet, dass** bereits die auf dem Endgerät des Nutzers nach der Einwahl in das Internet erscheinende Portalseite unter Nutzung der für ihn gespeicherten Präferenzen personalisiert wird.

4. Verfahren nach Anspruch 3, **dadurch gekennzeichnet, dass** der Nutzer über das Portal zur Veränderung der für ihn in der Datenbank gespeicherten Präferenzliste Zugriff auf die Datenbank hat.

5. Verfahren nach Anspruch 4, **dadurch gekennzeichnet, dass** der Zugriff des Nutzers zur Veränderung seiner Präferenzen ebenfalls vermittels einer inversen RADIUS-Abfrage erfolgt.

6. Verfahren nach Anspruch 1 oder 2, umfassend die Verfahrensschritte
a) Einwahl des Nutzers in das Internet unter Nutzung eines hierzu geeigneten Endgerätes durch Einwahl bei einem Zugangsserver eines ISP,
b) Anmelden und Identifizieren des Nutzers beim Zugangsserver,
c) Zuweisen einer temporären IP-Adresse an das zur Einwahl verwendete Endgerät mittels einer RADIUS-Abfrage,
d) Eingabe der Internet-Adresse (IP-Adresse) durch Angabe des Namens eines Webservers oder Anwahl eines Hyperlinks durch den Nutzer,
e) Routen der Verbindung vom Endgerät des Nutzers zum Webserver
f) Aufruf der gewünschten Website aus dem Webspace des Webservers,
g) Starten einer Datenbankabfrage beim ISP durch den Webserver unter Übermittlung der temporären IP-Adresse des zum Aufruf der Website verwendeten Endgerätes,
h) Durchführung einer inversen RADIUS-Abfrage durch den Zugangsserver oder einen diesem zugeordneten Datenbankserver des ISP zur Ermittlung eines oder mehrerer Identitätskennzeichen des Nutzers,
i) Abruf der unter den Identitätskennzeichen in der Datenbank des ISP gespeicherten Präferenzliste und Übertragung der Präferenzliste an den anfragenden Webserver,
j) Auswertung der Präferenzliste durch den Webserver und Ergänzung der zur Übertragung an den Nutzer bereitgehaltenen Website um mit den Präferenzen korrespondierende personalisierte Informationen,
k) Übertragung der Website mit personalisierten Informationen an das Endgerät des Nutzers.

7. Verfahren nach Anspruch 6, **dadurch gekennzeichnet, dass** die gemäß Verfahrensschritt b) erfolgende Anmeldung und Identifizierung des Nutzers bei der Einwahl in das IP-Netz unter Verwendung der Password Authentication Protocol-Methode (PAP) erfolgt und der Zugangsserver oder der ihm zugeordnete Datenbankserver im Falle einer Datenbankabfrage durch einen Webserver die dem Nutzer nach der Anmeldung zugeteilte temporäre IP-Adresse im Zuge der inversen RADIUS-Abfrage zunächst zu Username und gegebenenfalls Password auflöst und unter Nutzung dieser Angaben auf die in der Datenbank gespeicherte Präferenzliste zugreift.

8. Verfahren nach Anspruch 6, **dadurch gekennzeichnet, dass** die gemäß Verfahrensschritt b) erfolgende Anmeldung und Identifizierung des Nutzers bei der Einwahl in das IP-Netz unter Verwendung der Challenge and Response Authentication Protocol-Methode (CHAP) erfolgt und der Zugangsserver oder der ihm zugeordnete Datenbankserver im Falle einer Datenbankabfrage durch einen Webserver mittels der dem Nutzer nach der Anmeldung zugeteilten temporäre IP-Adresse über eine inverse RADIUS-Abfrage unter Nutzung der CHAP-Methode auf die in der Datenbank gespeicherte Präferenzliste zugreift.

## Claims

1. Method for outputting personalized information for an Internet user (user) accessing a website, in which a list with preferences (preference list), preferably concerning personal interests of the user, is stored for the user under an identifier such as the customer number or the like, in a database associated with the access server of his Internet service provider (ISP), **characterized in that** a web server contacted by the user to access a website queries the user's preferences by means of a database query at the ISP of the user, and the web server augments the web site accessed by the user with personalized information on the basis of the preferences obtained from the database before the transmission thereof to the terminal (computer or telecommunications terminal) used by the user for Internet access, wherein the web server transmits the temporary IP address of the terminal used for access to the website to the ISP for the database query and, at the ISP, the identifier of the user is determined by reversal of the Remote Authentication Dial-In User Service query (RADIUS query) used for assignment of the temporary IP address and the preference list stored in the database under the identifier is transmitted to the web server, which may also be a web server of the ISP itself.

2. Method according to claim 1, **characterized in that** the personalized information is Internet advertising tailored to the specific interests of the user, wherein these interests are encoded in the preference list that is maintained in the database of the ISP under the user's identifier.

3. Method according to claim 1 or 2, **characterized in that** even the portal page appearing on the user's terminal after dial-in to the Internet is personalized using the preferences stored for said user.

4. Method according to claim 3, **characterized in that** the user has access to the database through the portal for changing the preference list stored in the database for him.

5. Method according to claim 4, **characterized in that** the access of the user for changing his preferences likewise takes place by means of an inverse RADIUS query.

6. Method according to claim 1 or 2, comprising the steps:
a) dial-in by the user to the Internet using a terminal suited for this purpose by dialing in to an access server of an ISP,
b) login and identification of the user at the access server,
c) assignment of a temporary IP address by means of a RADIUS query to the terminal used for dial-in,
d) entry of the Internet address (IP address) by the user specifying the name of a web server or selecting a hyperlink,
e) routing of the connection from the user's terminal to the web server,
f) accessing the desired web site from the web space of the web server,
g) the web server initiating a database query at the ISP with the transmission of the temporary IP address of the terminal used to access the web site,
h) the access server or a database server of the ISP associated therewith executing an inverse RADIUS query to ascertain one or more identifiers of the user,
i) retrieval of the preference list stored under the identifier in the database of the ISP and transmission of the preference list to the querying web server,
j) evaluation of the preference list by the web server and augmenting of the web site held ready for transmission to the user with the personalized information corresponding to the preferences,
k) transmission of the web site with personalized information to the user's terminal.

7. Method according to claim 6, **characterized in that** the login and identification of the user taking place at dial-in to the IP network in accordance with method step b) is accomplished using the Password Authentication Protocol method (PAP), and in the case of a database query by a web server, during the course of the inverse RADIUS query the access server or the database server associated therewith first resolves the temporary IP address assigned to the user after login into a user name, and password if applicable, and uses this information in accessing the preference list stored in the database.

8. Method according to claim 6, **characterized in that** the login and identification of the user taking place at dial-in to the IP network in accordance with method step b) is accomplished using the Challenge and Response Authentication Protocol method (CHAP), and in the case of a database query by a web server, the access server or the database server associated therewith accesses the preference list stored in the database by means of the temporary IP address assigned to the user after login through an inverse RADIUS query using the CHAP method.

## Revendications

1. Procédé d'émission d'informations personnalisées destinées à un utilisateur d'internet (utilisateur) qui ouvre un site web, dans lequel une liste contenant des préférences (liste de préférences), de préférence relative à des centres d'intérêts personnels de l'utilisateur, est stockée pour l'utilisateur dans une base de données affectée au serveur d'accès d'un fournisseur de services internet (ISP) sous un identifiant, tel que le numéro de client ou similaire, **caractérisé en ce qu'**un serveur web contacté par l'utilisateur pour l'ouverture d'un site web demande à l'ISP de l'utilisateur, moyennant une interrogation de la base de données, de lui indiquer les préférences de l'utilisateur, et **en ce que** le serveur web ajoute au site web ouvert par l'utilisateur avant que celui-ci soit transmis au terminal (ordinateur ou terminal de télécommunication) utilisé par l'utilisateur pour accéder à internet, des informations personnalisées sur la base des préférences reçues de la base de données, le serveur web communiquant à l'ISP, pour permettre l'interrogation de la base de données, l'adresse IP temporaire du terminal utilisé pour accéder au site web et recherchant, au niveau de l'ISP, l'identifiant de l'utilisateur en inversant l'interrogation Remote Authentication Dial-In User Service (interrogation RADIUS) utilisée pour l'affectation de l'adresse IP temporaire, la liste de préférences affectée à l'identifiant et stockée dans la base de données étant transmises au serveur web qui peut être un serveur web de l'ISP lui-même.

2. Procédé selon la revendication 1, **caractérisé en ce que** les informations personnalisées correspondent à une publicité internet ciblant les centres d'intérêt respectifs de l'utilisateur, ces centres d'intérêt étant codés dans la liste de préférences tenue sous son identifiant dans la base de données de l'ISP.

3. Procédé selon les revendications 1 ou 2, **caractérisé en ce que** la page de portail est personnalisée en utilisant les préférences de l'utilisateur stockées dès qu'elle apparaît sur son terminal après la connexion à l'internet.

4. Procédé selon la revendication 3, **caractérisé en ce que** l'utilisateur a accès à la base de données via le portail pour modifier la liste de ses préférences qu'elle contient.

5. Procédé selon la revendication 4, **caractérisé en ce que** l'accès de l'utilisateur pour modifier ses préférences s'effectue également moyennant une interrogation RADIUS inverse.

6. Procédé selon les revendications 1 ou 2, comprenant les étapes de procédé suivantes
a) connexion de l'utilisateur à l'internet en utilisant un terminal approprié moyennant connexion à un serveur d'accès à un ISP,
b) enregistrement et identification de l'utilisateur auprès du serveur d'accès,
c) affectation d'une adresse IP temporaire au terminal utilisé pour la connexion moyennant une interrogation RADIUS,
d) saisie de l'adresse internet (adresse IP) par l'utilisateur en indiquant le nom d'un serveur web ou en sélectionnant un lien hypertexte,
e) routage de la connexion depuis le terminal de l'utilisateur vers le serveur web,
f) ouverture du site web souhaité depuis l'espace web du serveur web,
g) démarrage d'une interrogation de la base de données de l'ISP par le serveur web avec transmission de l'adresse IP temporaire du terminal utilisé pour l'ouverture du site web,
h) réalisation d'une interrogation RADIUS inverse par le serveur d'accès ou par un serveur de base de données de l'ISP affecté à ce dernier, pour rechercher un ou plusieurs identifiants de l'utilisateur,
i) récupération de la liste de préférences stockée dans la base de données de l'ISP sous les identifiants de l'ISP et transmission de la liste de préférences au serveur web interrogateur,
j) evaluation de la liste de préférences par le serveur web et ajout des informations personnalisées correspondant aux préférences au site web en attente d'être transmis à l'utilisateur,
k) transmission du site web avec les informations personnalisées au terminal de l'utilisateur.

7. Procédé selon la revendication 6, **caractérisée en ce que** l'enregistrement et l'identification de l'utilisateur selon l'étape b) du procédé au moment de la connexion au réseau IP s'effectue en utilisant la méthode Password Authentication Protocol (PAP) et **en ce que**, en cas d'interrogation de la base de données par un serveur web, le serveur d'accès ou le serveur de base de données qui lui est affecté résout, au cours de l'interrogation RADIUS inverse, d'abord l'adresse IP temporaire affectée à l'utilisateur après son enregistrement pour obtenir le nom d'utilisateur et, le cas échéant, le mot de passe, et accède à la liste de préférences stockée dans la base de données en utilisant ces informations obténues.

8. Procédé selon la revendication 6, **caractérisée en ce que** l'enregistrement et l'identification de l'utilisateur selon l'étape b) du procédé au moment de la connexion au réseau IP s'effectue en utilisant la méthode Challenge and Response Authentication Protocol (CHAP) et **en ce que**, en cas d'interrogation de la base de données par un serveur web, le serveur d'accès ou le serveur de base données qui lui est affecté accède, moyennant l'adresse IP temporaire affecté à l'utilisateur après son enregistrement, à la liste de préférences stockée dans la base de données par une interrogation RADIUS inverse en utilisant la méthode CHAP.
